# EUROPEAN PATENT APPLICATION

(11) **EP 1 587 086 A2**
(43) Date of publication of application: **19.10.2005**
(21) Application number: 05252286.9
(22) Date of filing: 12.04.2005
(51) Int. Cl.: G11B 7/09, G11B 7/095

(54) **Optical pickup actuator and optical recording and/or reproducing apparatus employing the same**

(30) Priority: 13.04.2004 KR 2004025498
(71) Applicant: SAMSUNG ELECTRONICS CO., LTD., Suwon-si, Gyeonggi-do (KR)
(72) Inventor: Cheong, Young Min, Seoul (KR); Lee, Jin-won, Bundang-gu, Seongnam-si Gyeonggi-do (KR); Kim, Kwang, Yeongtong-gu, Suwon-si Gyeonggi-do (KR)
(74) Representative: Waddington, Richard

(57) **Abstract**

An optical pickup actuator with a magnetic circuit and an optical recording and/or reproducing apparatus including the same. The magnetic circuit includes: a pair of unipolar magnets (31) that are fixed on the base (21) and oppose each other at one side of the objective lens (20); a pair of focus coils (33a,33b) that are disposed on the lens holder (30) between the pair of unipolar magnets (31), the pair of focus coils (33a,33b) being disposed in a direction crossed to a direction in which the pair of unipolar magnets (31) are disposed, to drive the optical pickup (250) in focus and tilt directions; a plurality of tracking coils (35) disposed on at least one side of the pair of focus coils (33a,33b) opposite the unipolar magnets (31); and a yoke structure including a pair of external yokes (25) supporting either one of the pair of the unipolar magnets (31), a pair of internal yokes (27a,27b) penetrated through the center of either one of the focus coils (33a,33b), and a connecting yoke (21') that connects the external yokes (25) with the internal yokes (27a, 27b) .

## Description

The present invention relates to an optical recording and/or reproducing apparatus and, more particularly, to an asymmetric optical pickup actuator designed to allow a tilt control as well as focusing and tracking controls, as well as an optical recording and/or reproducing apparatus employing the same.

Typically, an optical recording and/or reproducing apparatus records and/or reproduces information by irradiating a beam on an optical disc that serves as an optical information storage medium. To achieve these operations, the apparatus includes a turntable on which the optical disc is seated, a spindle motor to rotate the turntable, and an optical pickup that records and/or reproduces information by irradiating a beam on a recording surface of the optical disc. The optical pickup performs non-contact recording and/or reproducing of information onto and/or from the optical disc while moving in radial direction of the optical disc.

The demand for hand-held, high-speed storage devices that support high data transfer rates and data recording operations has recently increased. A similar increased demand has also applied to optical disc storage devices. With the advent of recordable DVD formats such as DVD-RAM and DVD±R/RW, the demand for highly precise and stable optical pickups for reading information from an optical disc has been on the rise.

To provide a slim portable design in addition to the improved performance, an optical recording and/or reproducing apparatus must also include components with compact and slim designs. Among these components are actuators that allow focusing and tracking by moving an objective lens to overcome surface oscillation and eccentricity of an optical disc. Further, actuators having decreased size are currently being developed. Thus, it follows that a size of an optical pickup to be used with these actuators also decreases as the sizes and thicknesses of actuators decrease.

As recording capacity and density of an optical disc increase, an optical signal, such as a reproduced information signal, is more likely to undergo degradation when the optical disc is bent or flexed. Thus, to compensate for the degradation in an optical signal, a tilt correction is made by removing a tilt of the objective lens relative to an optical disc measured.

To achieve this tilt correction, there is a need for an optical pickup actuator designed to perform three-axis actuation in a tilt direction. In particular, there is also a need for an optical actuator designed to perform three-axis actuation in a radial tilt direction as well as in tracking direction and focus direction. Thus, having a slim optical recording and/or reproducing apparatus and a high sensitivity actuator designed to perform three-axis control (in focus, track, and tilt directions) is desirable.

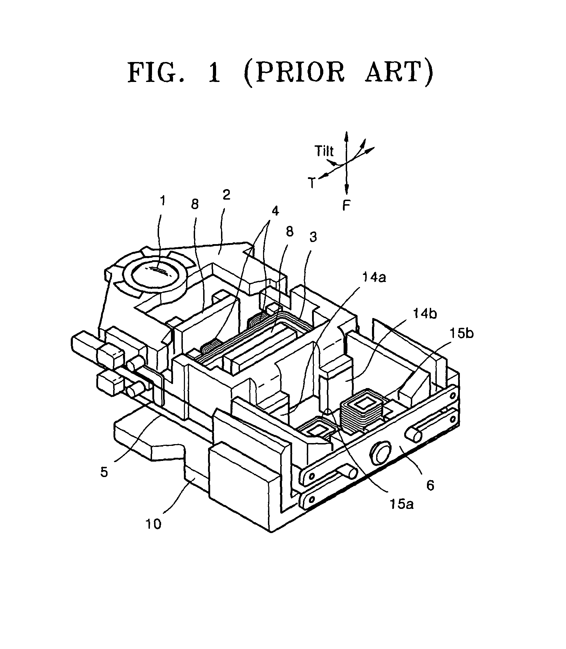

Referring to FIG. 1, which is a schematic diagram of a conventional optical pickup actuator, the conventional optical pickup actuator includes a magnetic circuit to control focusing and tracking driving so as to drive a lens holder 2 to hold an objective lens 1 in a focus direction F and a tracking direction T and a magnetic circuit to control tilt driving so as to drive the lens holder 2 in a tilt direction. The magnetic circuit for focusing and tracking control has a typical structure including a focus coil 3, a tracking coil 4, and magnets 8. Thus, by controlling current flowing through the focus coil 3 and the tracking coil 4, an electromagnetic force is generated to drive the lens holder 2 in focus direction F or tracking direction T. Reference numeral 5 denotes a wire that movably supports the lens holder 2 with respect to a base 10.

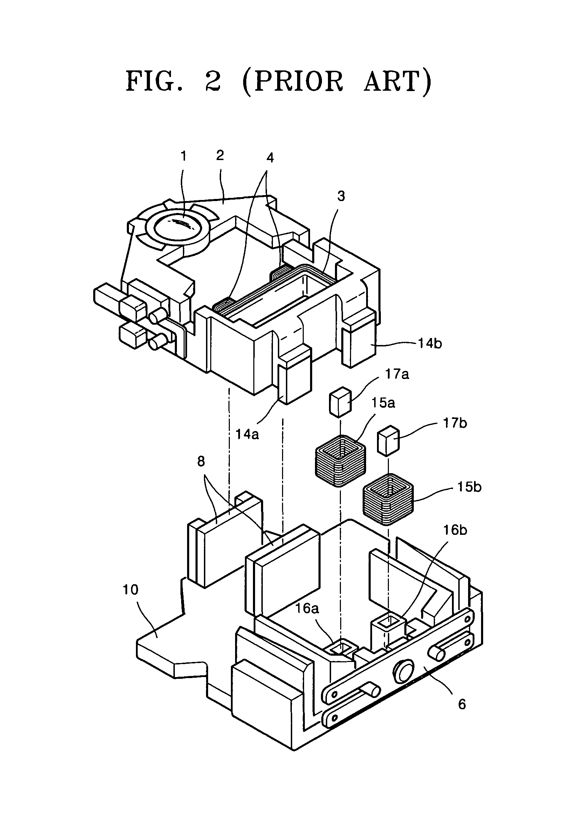

Meanwhile, referring to FIG. 2, the magnetic circuit to control tilt control includes iron cores 17a and 17b that are fitted into bosses 16a and 16b on the base 10, tilt coils 15a and 15b, and tilt magnets 14a and 14b, installed on the lens holder 2, in such a way as to oppose tilt coils 15a and 15b wound around the bosses 16a and 16b, respectively, and the iron cores 17a and 17b. Thus, in order to compensate for a tilt resulting from a bent or flexed optical disc, the lens holder 2 is driven in a tilt direction according to the direction in which current flows through the tilt coils 15a and 15b due to an interaction between the current and tilt magnets 14a and 14b. By changing the direction and magnitude of the current flowing through the tilt coils 15a and 15b, changing the direction and angle of a tilt of the lens holder 2 holding the objective lens 1 is possible.

Continuously increasing demand for higher density recording requires the use of a higher sensitivity optical pickup actuator. To provide high sensitivity, increasing the efficiency of a magnetic circuit while reducing the entire weight of a movable part of the actuator is necessary. The movable part is installed on a lens holder and driven in focus, tracking, and tilt directions. As the number of turns of the focus and tracking coils 3 and 4 on the movable part increases, the entire volume increases and high-frequency sensitivity decreases.

Also in the conventional optical pickup actuator shown in FIGS. 1 and 2, tilt magnets 14a and 14b for tilt control are mounted on the lens holder 2 holding the objective lens 1, thereby increasing the volume of the movable part and decreasing the high-frequency sensitivity. Furthermore, the conventional optical pickup actuator requires a separate space in which magnetic circuit components for tilt control, such as the tilt coils 15a and 15b, other than those components which are used for the magnetic circuit to control focusing and tracking control are installed. Thus, realizing a slim design is relatively very difficult.

The present invention provides an optical pickup actuator designed to allow actuation in tilt direction as well as in focus and tracking directions using two unipolar magnets, and an optical recording and/or reproducing apparatus employing the same.

According to the present invention there is provided an apparatus and method as set forth in the appended claims. Preferred features of the invention will be apparent from the dependent claims, and the description which follows.

According to an aspect of the present invention, there is provided an optical pickup actuator including a lens holder that holds an objective lens and is movably supported with respect to a base by a plurality of suspension and a magnetic circuit that drives the objective lens, wherein the magnetic circuit comprises a pair of unipolar magnets that are fixed on the base and oppose each other at one side of the objective lens, a pair of focus coils that are disposed on the lens holder between the pair of unipolar magnets, the pair of focus coils being disposed in a direction crossed to a direction in which the pair of unipolar magnets are disposed, to drive the optical pickup in focus and tilt directions, a plurality of tracking coils on at least one side of the pair of focus coils opposite the unipolar magnets, and a yoke structure including a pair of external yokes supporting each of the pair of the unipolar magnets, a pair of internal yokes penetrated through the center of each of the focus coils, and a connecting yoke that connects the external yokes with the internal yokes.

According to another aspect of the present invention, there is provided an optical recording and/or reproducing apparatus including an optical pickup with an actuator to drive an objective lens and which is installed movably along a radial direction of an optical information storage medium and reproduces information and/or records information from and/or on the optical information storage medium and a controller that controls focusing, tracking, and tilt servos. The actuator preferably includes a lens holder that holds an objective lens and is movably supported with respect to a base by a suspension and a magnetic circuit. The magnetic circuit is preferably composed of a pair of unipolar magnets that are fixed on the base and oppose each other at one side of the objective lens; a pair of focus coils that are disposed on the lens holder between the pair of unipolar magnets, the pair of focus coils being disposed in a direction crossed to a direction in which the pair of unipolar magnets are disposed, to drive the optical pickup in focus and tilt directions; a plurality of tracking coils disposed on at least one side of the pair of focus coils opposite the unipolar magnets; and a yoke structure including a pair of external yokes supporting each of the pair of the unipolar magnets, a pair of internal yokes penetrated through the center of each of the focus coils, and a connecting yoke.

The external yokes, the internal yokes, and the connecting yoke are preferably integrally formed with the base. The base is preferably cut using a lancing technique to form the external yokes and the internal yokes. The plurality of tracking coils preferably comprises four tracking coils, such that individual tracking coils are respectively disposed on both sides of each of the pair of focus coils.

Additional and/or other aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a schematic diagram of a conventional asymmetric optical pickup actuator;
FIG. 2 is an exploded perspective view of the optical pickup actuator of FIG. 1;
FIG. 3 is a perspective view of an asymmetric optical pickup actuator according to an embodiment of the present invention;
FIG. 4 is a perspective view of the magnetic circuit shown in FIG. 3;
FIG. 5 is a perspective view of a yoke structure shown in FIG. 3;
FIG. 6 illustrates DC rolling characteristics evaluated for a sample of an optical pickup actuator according to an embodiment of the present invention with the magnetic circuit of FIG. 4; and
FIG. 7 is a schematic diagram of an optical recording and/or reproducing apparatus employing an optical pickup actuator according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

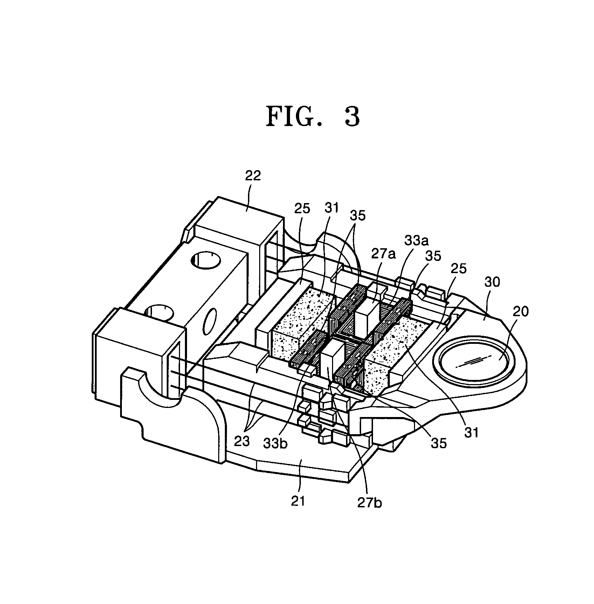

Referring to FIGS. 3-5, an asymmetric optical pickup actuator, according to an embodiment of the present invention, includes a lens holder 30 that holds an objective lens 20 on one side, a plurality of suspensions 23 that movably support the lens holder 30 with respect to a base 21, each with one end attached to the lens holder 30 and the other end fixed to a holder 22 mounted on one side of the base 21, and a magnetic circuit installed on the lens holder 30 and the base 21.

The magnetic circuit includes a pair of unipolar magnets 31 that are fixed on the base 21 and oppose each other at one side of the objective lens 20, a pair of focus coils 33a and 33b and a plurality of tracking coils 35 mounted on the lens holder 30 between the unipolar magnets 31, and a yoke structure.

The objective lens 20, the lens holder 30, the pair of focus coils 33a and 33b, and the plurality of tracking coils 35 make up a movable part of the optical pickup actuator. Four or six suspensions 23 may be used as wires to apply current. FIG. 3 shows an example in which six suspensions 23 are used as wires to apply current for tracking, focus, and tilt control. Here, four suspensions 23 may be used as wires to apply current for tracking and focus control, and two wires may further be used to apply current for tilt control.

Referring to FIG. 3, reference numeral 22 denotes a holder to fix the suspensions 23. The suspension 23 has one end attached to the lens holder 30 and the other end fixed to the holder 22, mounted on the base 21, so as to movably support the lens holder 30 with respect to the base 21.

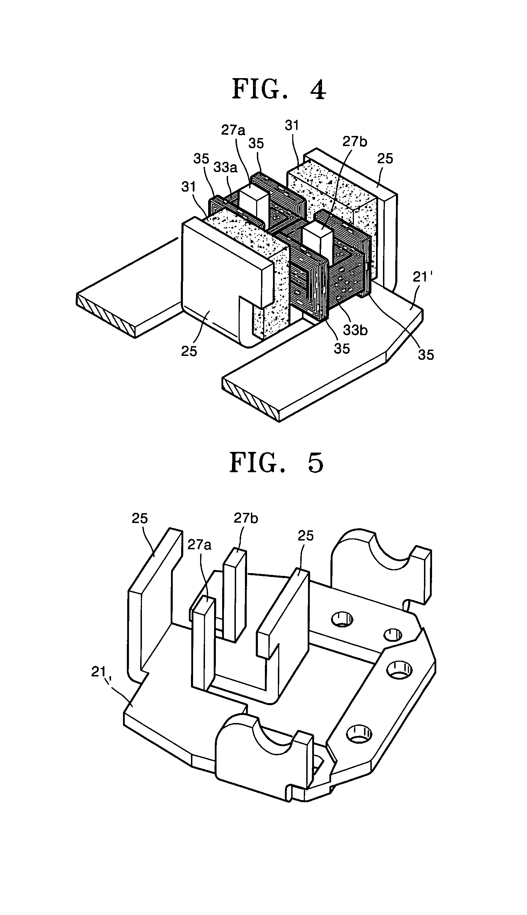

The pair of unipolar magnets 31 are each disposed in a tangential direction of an optical disc that is an optical information storage medium. The pair of focus coils 33a and 33b are disposed in a radial direction of the optical disc, crossed to that in which the pair of the unipolar magnets 31 is disposed. The plurality of tracking coils 35 are disposed on at least one side of the pair of focus coils 33a and 33b opposite the unipolar magnets 31. FIGS. 3 and 4 show an example in which the plurality of tracking coils 35 comprises four tracking coils, such that individual tracking coils are respectively disposed on both sides of each of the focus coils 33a and 33b.

The pair of focus coils 33a and 33b and the plurality of tracking coils 35 may be formed into a coil assembly. To achieve a coil assembly, the focus coils 33a and 33b and the plurality of tracking coils 35 are made of prewound bulk coils, the pair of focus coils 33a and 33b are attached to each other, and the tracking coils 35 are attached to the focus coils 33a and 33b.

One alternative embodiment involves winding the pair of focus coils 33a and 33b around a bobbin and then attaching the plurality of tracking coils 35 to sides of the focus coils 33a and 33b. Another embodiment involves mounting the pair of focus coils 33a and 33b and winding the plurality of tracking coils 35 around the bobbin so that the tracking coils may be wound in an aligned manner and then mounting the wound tracking coils 35 on the lens holder 30. In this case, the bobbin about which the tracking coils 35 are wound in an aligned manner may be mounted on the lens holder 30.

The pair of focus coils 33a and 33b are used for tilt control, and, in particular, for radial tilt control as well as focus control.

Since the pair of unipolar magnets 31 are used and the pair of focus coils 33a and 33b are disposed in a radial direction, when current is applied across the focus coils 33a and 33b in a similar direction, an electromagnetic force is exerted on the focus coils 33a and 33b in either a positive or a negative focus direction due to interaction between the current passing through them and magnetic flux generated by the unipolar magnets 31, which causes the movable part to move in a focus direction.

Conversely, when current is applied across the pair of the focus coils 33a and 33b in opposite directions, the above-described electromagnetic force is then exerted on either of the focus coils 33a and 33b in the positive focus direction and on the other one in the negative focus direction due to interaction between the current flowing across the same and magnetic flux from the unipolar magnets 31, which allows the movable part to move in a radial tilt direction.

Since tilt control must be performed during focus control, current for tilt control is applied to the pair of focus coils 33a and 33b in addition to the current for focus control. For example, where the magnitudes of current applied through the two focus coils 33a and 33b for focus control and tilt control are A and B, respectively, current having magnitude of A+B is applied to one focus coil and current having magnitude of A-B is applied to the other focus coil to perform focus and tilt control substantially simultaneously.

Thus, where focus driving force and tilt driving force applied to the focus coils 33a and 33b are F1 and F2, respectively, an electromagnetic force of F1+F2 is exerted on either one of the focus coils 33a and 33b while an electromagnetic force of F1-F2 is exerted on the other when focus control and tilt control are performed substantially simultaneously.

The optical pickup actuator uses a combination of coils and magnets to provide focus actuation instead of separate coils and magnets to provide tilt control in order to perform radial tilt control via a focusing differential method.

Referring to FIG. 5, the yoke structure includes a pair of external yokes 25, a pair of internal yokes 27a and 27b, and a connecting yoke 21'. The pair of unipolar magnets 31 are fixed to each of the external yokes 25. The pair of internal yokes 27a and 27b are located through the center of each of the focus coils 33a and 33b. The pair of the external yokes 25 are connected to the pair of the internal yokes 27a and 27b by the connecting yoke 21'. Further, in an embodiment of the invention, as shown in FIG. 5, the pair of external yokes 25, the pair of internal yokes 27a and 27b, and the connecting yoke 21' may be integrally formed with the base 21. In this case, a portion of the base 21 serves as the connecting yoke 21'. A portion of the base 21 may be bent upward to form the pair of external yokes 25 and the pair of internal yokes 27a and 27b. Alternatively, in another embodiment of the invention, the pair of external yokes 25, the pair of internal yokes 27a and 27b, and the connecting yoke 21' may be integrated into a yoke assembly and then attached to the base 21.

As shown in FIG. 5, considering that the internal yokes 27a and 27b penetrate through the center of each of the focus coils 33a and 33b, portions of the external yokes 25 may be cut to form the internal yokes 27a and 27b. To this end, a lancing technique may be performed to minimize a blank area, to create the internal yokes 27a and 27b with a maximized width, and to prevent deformation and reduction in rigidity of the movable part due to an extremely small width of the connecting yoke 21' between the internal yokes 27a and 27b and the external yokes 25.

When a typical press molding technique is used, a blank area is formed on three sides except a cut portion. Thus, the width of a connecting yoke may be too small, causing deformation and reduction in rigidity to occur. Another drawback is that cutting a portion of an external yoke for formation of an internal yoke is difficult. Thus, the typical press molding makes creating the yoke structure, as shown in FIG. 5, difficult.

In contrast to the typical press molding, the lancing technique may minimize a blank area such that forming the yoke structure, shown in FIG. 5, is relatively easy.

By integrally forming the pair of external yokes 25, the pair of internal yokes 27a and 27b, and the connecting yoke 21' into the base 21, a minimization of the number of components is possible. Further, making the optical pickup actuator slimmer is also possible.

The asymmetric optical pickup actuator according to the present invention has a simple structure including six coils and two unipolar magnets and uses a moving coil manner to increase a sensitivity thereof. Furthermore, the optical pickup actuator is able to perform a radial tilt via of a focusing differential method while performing focusing control and tracking driving independent of each other. The asymmetric optical pickup actuator is designed to have a compact and lightweight design by eliminating the need for magnets and coils for tilt control while providing high sensitivity and stability. As a result, the actuator allows three-axis actuation while reducing a phase delay.

Thus, the asymmetric optical pickup actuator may be used in an ultra-slim optical recording and/or reproducing apparatus such as an ultra-slim recordable DVD drive for a notebook computer.

More specifically, a high level specification of an optical pickup actuator is required to increase sensitivity so as to be able to meet high-speed requirements and prevent optical aberrations. In particular, as the size of a notebook PC decreases to improve mobility thereof, specification requirements for an ultraslim optical pickup actuator become stricter to meet the accompanying ultraslim size requirements.

Since an optical pickup must have a small structure and height to allow mounting of the structure onto an ultraslim optical recording and/or reproducing apparatus, an ultraslim optical pickup actuator is relatively very vulnerable to a high sensitivity design and a design insensitive to a tilt of an objective lens during a shift. Furthermore, the high sensitivity design of the actuator generally degrades DC tilt (rolling) characteristics.

Thus, to improve these characteristics, moments created in focus coils and tracking coils must collide with each other. That is, there is a need for a design technique to optimize magnetic characteristics of the coils.

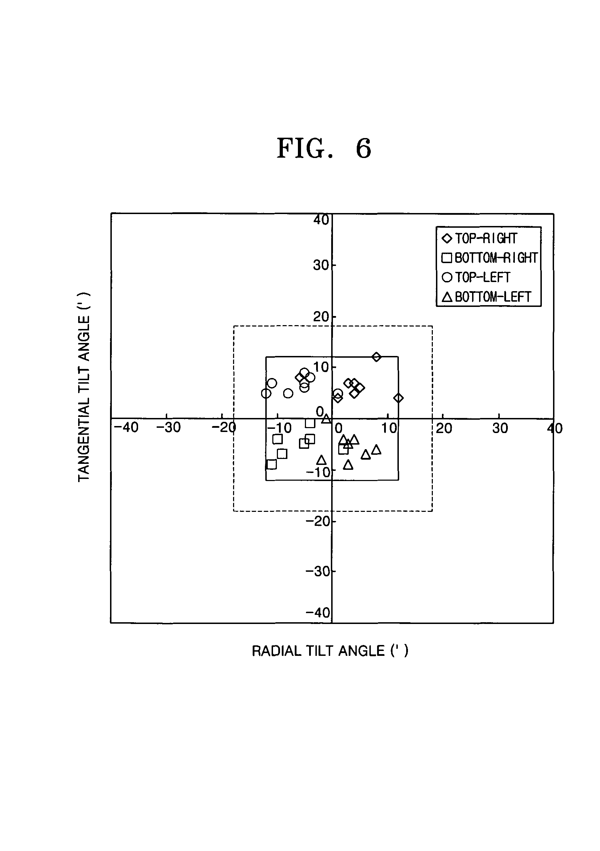

FIG. 6 illustrates DC rolling characteristics that are evaluated for a sample of an optical pickup actuator according to an embodiment of the present invention with the magnetic circuit of FIG. 4. In FIG. 6, the abscissa and the ordinate denote a radial tilt angle and a tangential tilt angle expressed in units of minutes, respectively. The sample was designed to satisfy sensitivity requirements and DC rolling characteristics through the use of optimally designed magnetic circuit.

As is evident by FIG. 6, the optical pickup actuator, according to the present invention, meets optical design requirements that DC rolling is less than 0.3° (18') when driving distances are ±0.4mm and ±0.2mm in focus and track directions, respectively, since a DC tilt amount varies by less than 0.2°. At the same time, the optical pickup actuator, according to the present invention, sufficiently meets tracking sensitivities of 0.65mm/v and 55µm/v required in DC and AC specifications, respectively.

Furthermore, the optical pickup actuator according to the present invention may have a sufficiently small size and height. In an embodiment of the invention, the height is smaller than 4.4mm. Such a height allows the optical pickup actuator to be used in an ultraslim drive.

In FIG. 6, the abscissa and ordinate denote a track shift and a focus shift, respectively. Data indicated by top-right, bottom-right, top-left, and bottom-left sectors of the graph represent DC tilt amounts when the actuator is driven by ±0.4mm and ±0.2mm in the focus direction and the track direction, respectively. Thus, high quality optical signals may be obtained through the use of an optical pickup actuator according to the present invention.

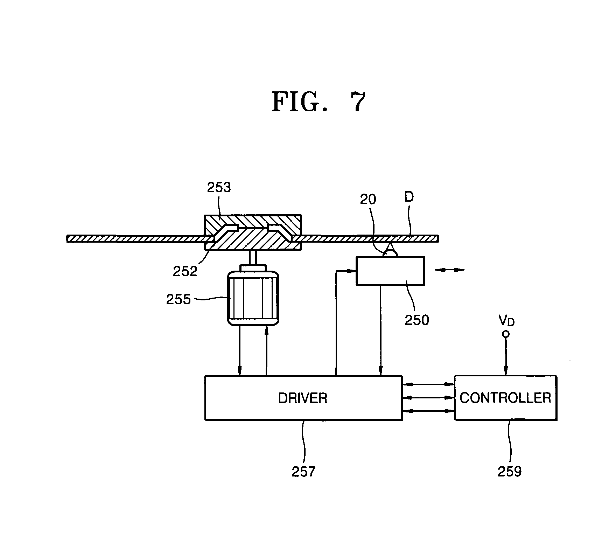

FIG. 7 is a schematic diagram of an optical recording and/or reproducing apparatus including an optical pickup actuator according to the present invention. Referring to FIG. 7, the optical recording and/or reproducing apparatus includes a spindle motor 255 that rotates an optical disc D that is an optical information storage medium, an optical pickup 250 that is installed movably along a radial direction of the optical disc D and reproduces information and/or records information from and/or on the optical disc D, a driver 257 that drives the spindle motor 255 and the optical pickup 250, and a controller 259 that controls focusing, tracking, and/or tilt servos of the optical pickup 250. The optical recording and/or reproducing apparatus further includes a turntable 252 and a clamp 253 to chuck the optical disc D.

The optical pickup 250 includes an optical system with an objective lens 20 that focuses a beam emitted by a light source onto the optical disc D and an optical pickup actuator to drive the objective lens 20 in three axis directions. The optical pickup actuator may be an asymmetric optical pickup actuator according to the present invention as described above.

A beam reflected from the optical disc D is detected by a photodetector mounted in the optical pickup 250 and is photoelectrically converted into an electrical signal that is then input to the controller 259 through the driver 257. The driver 257 controls the rotating speed of the spindle motor 455, amplifies the input signal, and drives the optical pickup 250. The controller 259 sends focus servo, tracking servo, and/or tilt servo commands, which will have been adjusted based on the signal received from the driver 257, back to the driver 257 so that the optical pickup 250 may perform focusing, tracking, and/or tilting servo operation.

The optical pickup actuator according to the present invention has an asymmetric structure including two unipolar magnets, two focus coils, and a plurality of tracking coils so as to allow actuation in focus, tracking, and tilt directions. In addition, the optical pickup actuator according to the present invention includes a yoke structure that itself includes a pair of external yokes, a pair of internal yokes, and a connecting yoke to connect the external and internal yokes.

The optical pickup actuator achieves a compact and lightweight design by reducing the number of components required while providing high sensitivity, three-axis actuation, and stability when used for an ultraslim optical recording and/or reproducing apparatus (drive).
Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical pickup actuator including a lens holder (30) that holds an objective lens (20) and is movably supported with respect to a base (21) by a plurality of suspensions (23) and a magnetic circuit that drives the objective lens (20), wherein the magnetic circuit comprises:
a pair of unipolar magnets (31) that are fixed on the base (21) and oppose each other at one side of the objective lens (20);
a pair of focus coils (33a,33b) that are disposed on the lens holder (30) between the pair of unipolar magnets (31), the pair of focus coils (33a,33b) being disposed in a direction crossed to a direction in which the pair of unipolar magnets (31) are disposed, to drive the optical pickup in focus and tilt directions;
a plurality of tracking coils (35) on at least one side of the pair of focus coils (33a,33b) opposite the unipolar magnets (31); and
a yoke structure including a pair of external yokes (25) supporting each of the pair of the unipolar magnets (31), a pair of internal yokes (27a,27b) penetrated through the center of each of the focus coils (33a,33b), and a connecting yoke (21') that connects the external yokes (25) with the internal yokes (27a,27b).

2. The actuator of claim 1, wherein the external yokes (25), the internal yokes (27a,27b), and the connecting yoke (21') are integrally formed with the base (21).

3. The actuator of claim 2, wherein the external yokes (25) and the internal yokes (27a,27b) are formed by cutting and bending the base (21) using a lancing technique.

4. The actuator of any one of claims 1 to 3, wherein the plurality of tracking coils (35) comprises four tracking coils (35), such that individual tracking coils (35) are respectively disposed on both sides of each of the pair of focus coils (33a,33b).

5. An optical recording and/or reproducing apparatus including an optical pickup with an actuator to drive an objective lens (20) and which is movably installed along a radial direction of an optical information storage medium (D) and reproduces information and/or records information from and/or onto the optical information storage medium (D) and a controller (259) that controls focusing, tracking, and tilt servos, wherein the actuator comprises:
a lens holder (30) that holds an objective lens (20) and is movably supported with respect to a base (21) by a suspension (23); and
a magnetic circuit including a pair of unipolar magnets (31) that are fixed on the base (21) and oppose each other at one side of the objective lens (20); a pair of focus coils (33a,33b) that are disposed on the lens holder (30) between the pair of unipolar magnets (31), the pair of focus coils (33a,33b) being disposed in a direction crossed to a direction in which the pair of unipolar magnets (31) are disposed, to drive the optical pickup in focus and tilt directions; a plurality of tracking coils (35) disposed on at least one side of the pair of focus coils (33a,33b) opposite the unipolar magnets (31); and a yoke structure including a pair of external yokes (25) supporting each of the pair of the unipolar magnets (31), a pair of internal yokes (27a,27b) penetrated through the center of each of the focus coils (33a,33b), and a connecting yoke (21').

6. The apparatus of claim 5, wherein the external yokes (25), the internal yokes (27a,27b), and the connecting yoke (21') are integrally formed with the base (21).

7. The apparatus of claim 6, wherein the external yokes (25) and the internal yokes (27a,27b) are formed by cutting and bending the base (21) using a lancing technique.

8. The apparatus of any one of claims 5 to 7, wherein the plurality of tracking coils (35) comprises four tracking coils (35), such that individual tracking coils (35) are respectively disposed on both sides of each of the pair of focus coils (33a,33b).

9. A magnetic circuit to control a focusing and tilting of an actuator including a base (21) and a lens holder (30) that is movably supported with respect to the base (21), the magnetic circuit comprising:
a pair of magnets (31), fixed on the base (21), to oppose each other;
a pair of focus coils (33a,33b), disposed on the lens holder (30), the pair of focus coils (33a,33b) being disposed in a direction crossed to a direction in which the pair of unipolar magnets (31) are disposed, to drive the optical pickup in focus and tilt directions;
a plurality of tracking coils (35) between at least one of the magnets (31) and the focus coils (33a,33b); and
a yoke structure to support the pair of magnets (31) and the pair of focus coils (33a,33b), the yoke structure being integrally connected to the base (21).

10. The magnetic circuit according to claim 9, wherein each of the magnets (31) comprises a unipolar magnet that is fixed on the base (21) and which opposes the other magnet (31).

11. The magnetic circuit according to claim 10, wherein the pair of unipolar magnets (31) are each to be disposed in a tangential direction of an information storage medium (D).

12. The magnetic circuit according to any one of claims 9 to 11, wherein the pair of focus coils (33a,33b) and the plurality of tracking coils (35) may be formed into a coil assembly.

13. The magnetic circuit according to claim 12, wherein the coil assembly comprises prewound bulk coils.

14. The magnetic circuit according to any one of claims 9 to 13, wherein when current is applied across each of the focus coils (33a,33b) in a similar direction, an electromagnetic force is exerted on both of the focus coils (33a,33b) in either a positive or a negative focus direction.

15. The magnetic circuit according to claim 14, wherein when current is applied across each of the focus coils (33a,33b) in opposite directions, an electromagnetic force is then exerted on each of the focus coils (33a,33b) in opposite focus directions.

16. The magnetic circuit according to claim 15, wherein since a tilt control operation must be performed during focus control, an electric current to drive the tilt control operation is applied to the pair of focus coils (33a,33b) in addition to the current for focus control.

17. The magnetic circuit according to any one of claims 9 to 16, wherein the yoke structure comprises:
a pair of external yokes (25) to which the pair of magnets (31) are each fixed:
a pair of internal yokes (27a,27b) to penetrate a center of each of the focus coils (33a,33b): and
a connecting yoke (21') to connect the external yokes (25) and the internal yokes (27a,27b).

18. The magnetic circuit according to claim 17, wherein the pair of external yokes (25), the pair of internal yokes (27a,27b), and the connecting yoke (21') are integrally formed with the base (21).

19. The magnetic circuit according to claim 18, wherein a portion of the base (21) is bent upward to form the pair of external yokes (25) and the pair of internal yokes (27a,27b).

20. The magnetic circuit according to any one of claims 17 to 19, wherein the pair of external yokes (25), the pair of internal yokes (27a,27b), and the connecting yoke (21') are integrated into a yoke assembly and then attached to the base (21).

21. The magnetic circuit according to claim 20, wherein, since the internal yokes (27a,27b) penetrate the center of each of the focus coils (33a,33b), portions of the external yokes (25) are cut to form the internal yokes (27a,27b).

22. The magnetic circuit according to claim 21, wherein a lancing technique is performed to minimize a blank area in a manufacturing operation of the internal yokes (27a,27b).

23. The magnetic circuit according to any one of claims 9 to 22, wherein, due to an operation of the magnetic circuit, the actuator performs a radial tilt while performing focusing and tracking operations.

24. The magnetic circuit according to any one claims 9 to 23, wherein the actuator meets optical design requirements that DC rolling be less than 0.3°(18') when driving distances are ±0.4mm and ±0.2mm in focus and track directions, respectively.

25. The magnetic circuit according to claim 24, wherein the actuator meets tracking sensitivities of 0.65mm/v and 55µm/v required in DC and AC specifications, respectively.

26. The magnetic circuit according to any one of claims 9 to 25, wherein a height of the actuator is smaller than 4.4mm.

27. The magnetic circuit according to any one of claims 9 to 26, wherein the magnetic circuit is to be used with an optical recording and/or reproducing apparatus, including an optical pickup actuator, the apparatus comprising:
a spindle motor (255) to rotate an information storage medium (D);
an optical pickup (250) movably installed along a radial direction of the optical disc D to reproduce information and/or record information from and/or onto the medium;
a driver (257) to drive the spindle motor (255) and the optical pickup (250); and
a controller (259) to control focusing, tracking, and/or tilt servos of the optical pickup (250).

28. The magnetic circuit according to claim 27, wherein the apparatus further comprises a turntable (252) and a clamp (253) to chuck the medium.

29. The magnetic circuit according to claim 27 or claim 28, wherein the optical pickup (250) comprises an optical system with an objective lens (20) to focus a beam emitted by a light source onto the medium.

30. The magnetic circuit according to claim 29, wherein the beam is detected by a photodetector mounted in the optical pickup (250) and is photoelectrically converted into an electrical signal that is then input to the controller (259) through the driver (257).

31. A magnetic circuit of an actuator including a base (21) and a lens holder (30) that is movably supported with respect to the base (21), the magnetic circuit comprising:
a pair of magnets (31), fixed on the base (21), to oppose each other;
a pair of focus coils (33a,33b), disposed on the lens holder (30), the pair of focus coils (33a,33b) being disposed in a direction crossed to a direction in which the pair of unipolar magnets (31) are disposed, to drive the optical pickup (250) in focus and tilt directions;
a plurality of tracking coils (35) between at least one of the magnets (31) and the focus coils (33a,33b); and
a yoke structure including a pair of first yokes (25) to support the magnets (31), a pair of second yokes (27a,b) to penetrate the focus coils (33a,33b), and a connecting yoke (21') to connect the external yokes (25) with the internal yokes (27a,27b) the yoke structure being integrally connected to the base (21).
